# EUROPEAN PATENT APPLICATION

(11) **EP 4 629 198 A1**
(43) Date of publication of application: **08.10.2025**
(21) Application number: 25162460.7
(22) Date of filing: 07.03.2025
(51) Int. Cl.: G06V 40/18, G06V 40/50

(54) **IMAGING APPARATUS**

(30) Priority: 01.04.2024 JP 2024059087
(71) Applicant: CANON KABUSHIKI KAISHA, Tokyo 146-8501 (JP)
(72) Inventor: MAKITA, Koji, Tokyo, 146-8501 (JP); FUJIKI, Masakazu, Tokyo, 146-8501 (JP)
(74) Representative: Canon Europe Limited

(57) **Abstract**

An imaging apparatus includes imaging means configured to capture an eyeball image of a user of the imaging apparatus, first determination means configured to determine whether the eyeball image satisfies a first condition, second determination means configured to determine whether the eyeball image satisfies a second condition, first identification means configured to execute first identification processing for identifying a user of the imaging apparatus based on a first eyeball image determined to satisfy the first condition, second identification means configured to execute second identification processing for identifying the user of the imaging apparatus based on a second eyeball image determined to satisfy the second condition, and control means configured to perform control to record information regarding the user identified by the first identification processing and the second identification processing and the eyeball image captured by the imaging apparatus in a memory in association with each other.

## Description

### BACKGROUND OF THE INVENTION

### Technical Field

The present invention relates to an imaging apparatus, a control method for an imaging apparatus, a computer program and a computer-readable data carrier having stored thereon the said computer program.

### Description of the Related Art

A camera intended for handheld use or an information processing apparatus such as a head-mounted display sometimes authenticates a user by comparing a pre-registered image and an image acquired by a camera for capturing the user that is built in the information processing apparatus. In order to correctly perform authentication using images, a person appearing in the pre-registered image and a person appearing in the image acquired by the camera need to be determined to be the same person. Japanese Unexamined Patent Application Publication (Translation of PCT Application) No. 2013-518319 discusses pre-registering a plurality of images each with a different iris size, selecting a registered image with an iris size similar to an iris size of an authentication image at the time of authentication, and calculating a similarity degree of images.

### SUMMARY OF THE INVENTION

In performing identification of a user using a captured image of an eyeball of the user of an imaging apparatus, further improvement of identification accuracy has been demanded.

The present invention is directed to improving the identification accuracy of the user of the imaging apparatus.

According to a first aspect of the present invention, there is provided an imaging apparatus as specified in claim 1. Preferable features of the first aspect of the present invention are specified in claims 2-15. These preferable features of the first aspect are also preferable features of the other aspects of the present invention (control method for an imaging apparatus, computer program and computer-readable data carrier having stored thereon the said computer program).

Further features of the present invention will become apparent from the following description of embodiments with reference to the attached drawings.

### BRIEF DESCRIPTION OF THE DRAWINGS

Figs. 1A and 1B are diagrams each illustrating appearance of an imaging apparatus.
Fig. 2 is a diagram illustrating an internal configuration of the imaging apparatus.
Fig. 3 is a block diagram illustrating a hardware configuration of an imaging apparatus.
Fig. 4 is a block diagram illustrating a functional configuration of the imaging apparatus.
Fig. 5 is a flowchart illustrating processing to be executed in a scene where registration of an eyeball image is performed.
Fig. 6 is a diagram illustrating an example of a home screen.
Fig. 7 is a diagram illustrating an example of an activation screen of an image registration application.
Fig. 8 is a diagram illustrating an example of a screen to be displayed during image acquisition.
Fig. 9 is a diagram illustrating an example of a screen indicating a lapse of a registration time.
Fig. 10 is a diagram illustrating an example of a registration completion screen.
Fig. 11 is a diagram illustrating an example of a home screen.
Fig. 12 is a diagram illustrating an example of a registration noncompletion screen.
Fig. 13 is a flowchart illustrating details of eyeball image registration processing.
Fig. 14 is a diagram illustrating an example of data to be used in image determination.
Fig. 15 is a diagram illustrating an example of a registered eyeball image.
Fig. 16 is a diagram illustrating an example of a camera image.
Figs. 17A and 17B are diagrams each illustrating an example of an eyeball detection result.
Fig. 18 is a block diagram illustrating a functional configuration of an imaging apparatus.
Fig. 19 is a flowchart illustrating processing to be executed in a scene where the imaging apparatus is used according to a second embodiment.
Fig. 20 is a flowchart illustrating processing to be executed in a scene where an imaging apparatus is used according to a third embodiment.

### DESCRIPTION OF THE EMBODIMENTS

Hereinafter, each embodiment of the present invention will be described with reference to the drawings.

In a first embodiment, the description will be given of a method of performing registration of an eyeball image in accordance with whether an image captured using a camera built in a viewfinder of an imaging apparatus satisfies a first standard or satisfies a second standard.

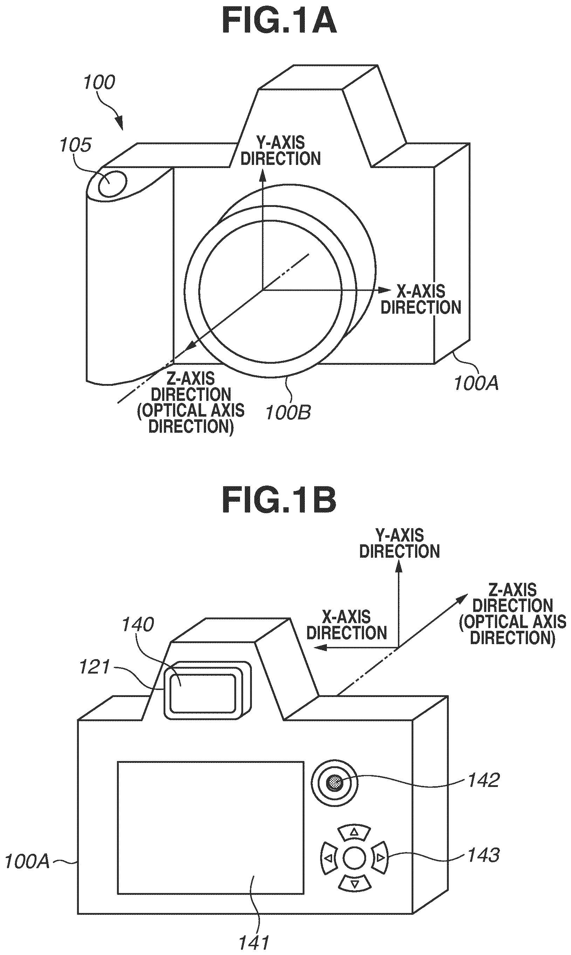

Figs. 1A and 1B are diagrams each schematically illustrating an imaging apparatus 100 according to the present embodiment. Fig. 1A is a front perspective view of the imaging apparatus 100, and Fig. 1B is a rear perspective view of the imaging apparatus 100. In the present embodiment, as illustrated in Fig. 1A, the imaging apparatus 100 is configured such that an imaging lens 100B is detachably attached to an apparatus main body 100A. In the apparatus main body 100A, a release button 105 that is an operation member for receiving an operation from a user when image capturing of a subject is performed is arranged. In the present embodiment, a digital still camera will be described as an example of an imaging apparatus, but the imaging apparatus is not limited to the digital still camera and may be a head-mounted display (HMD), a data terminal apparatus equipped with a camera (for example, a smartphone or a tablet personal computer (PC)), or the like.

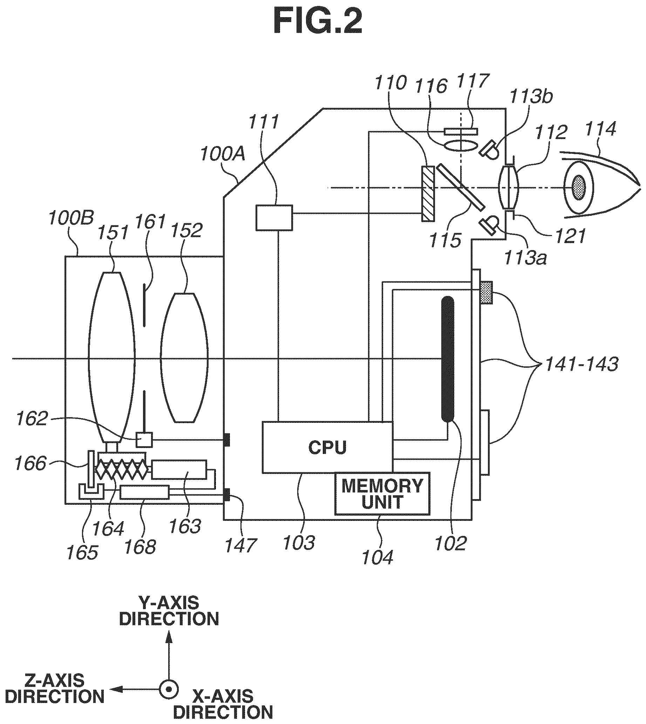

As illustrated in Fig. 1B, a viewfinder 140 is provided on a rear surface of the imaging apparatus 100. The viewfinder 140 is arranged for the user to look through a display element 110 to be described below. A detection sensor 121 that detects the user looking through the viewfinder 140 is also arranged. An eyepiece lens 112 (Fig. 2) is arranged inside the viewfinder 140.

As illustrated in Fig. 1B, a rear display device 141 and operation buttons 142 and 143 that are operation members for receiving various operations are arranged on the rear surface of the imaging apparatus 100. In the present embodiment, the rear display device 141 is a touch panel display having a function as an operation unit.

Fig. 2 is a sectional view of the imaging apparatus 100 that is taken along a YZ plane extending along a Y-axis and a Z-axis illustrated in Fig. 1A and illustrates an internal configuration of the imaging apparatus 100. In Figs. 1A, 1B, 2, and 3 to be described below, corresponding portions are indicated by the same reference numerals.

In Fig. 2, the imaging lens 100B is attached to the apparatus main body 100A. In the present embodiment, for the sake of example, the imaging lens 100B includes two inside lenses 151 and 152, but may also include a larger number of lenses.

The apparatus main body 100A includes an image sensor 102. A subject image having passed through the imaging lens 100B is formed on the image sensor 102. The apparatus main body 100A also includes a central processing unit (CPU) 103 that controls the entire imaging apparatus 100, and a memory unit 104 that stores programs to be executed by the CPU 103, and various types of data. By predetermined image processing being performed on an image signal obtained from the image sensor 102, under the control of the CPU 103, a captured image is generated. The captured image is stored in the memory unit 104.

The apparatus main body 100A also includes the display element 110, and a display element drive circuit 111 that drives the display element 110. The display element 110 includes a liquid-crystal display (LCD), and a captured image from the image sensor 102 is displayed thereon. The eyepiece lens 112 is used to observe an image displayed on the display element 110, in an enlarged state.

Illumination light sources 113a and 113b are light sources for illuminating an eyeball 114 of the user, include infrared light-emitting diodes, are arranged around the eyepiece lens 112, and emit infrared light. An eyeball image by illumination and images obtained by corneal reflection of the illumination light sources 113a and 113b pass through the eyepiece lens 112, are reflected by an optical splitter 115, and are formed by a light receiving lens 116 on an eyeball image sensor 117 on which photoelectric conversion elements such as charge-coupled devices (CCD) are two-dimensionally arrayed. The light receiving lens 116 is arranged such that a pupil of the eyeball 114 of the user and the eyeball image sensor 117 are in a conjugate imaging relationship. By predetermined image processing being performed on an image signal obtained from the eyeball image sensor 117, under the control of the CPU 103, a captured image of the eyeball 114 is generated. In the present embodiment, the two illumination light sources 113a and 113b are arranged, but three or more illumination light sources may be arranged around the eyepiece lens 112.

On the other hand, the imaging lens 100B includes a diaphragm 161, a diaphragm drive apparatus 162, a lens drive motor 163, a lens drive member 164, and a photocoupler 165. The lens drive member 164 includes a gear. The photocoupler 165 detects rotation of a pulse plate 166 rotating in conjunction with the lens drive member 164, and conveys the rotation to a focus adjustment circuit 168.

Based on information regarding a rotation amount of the lens drive member 164 and information regarding a lens drive amount of the apparatus main body 100A, the focus adjustment circuit 168 drives the lens drive motor 163 by a predetermined amount to adjust the imaging lens 100B to an in-focus state. The imaging lens 100B transmits and receives signals to and from the apparatus main body 100A via a mount contact 147 of the apparatus main body 100A.

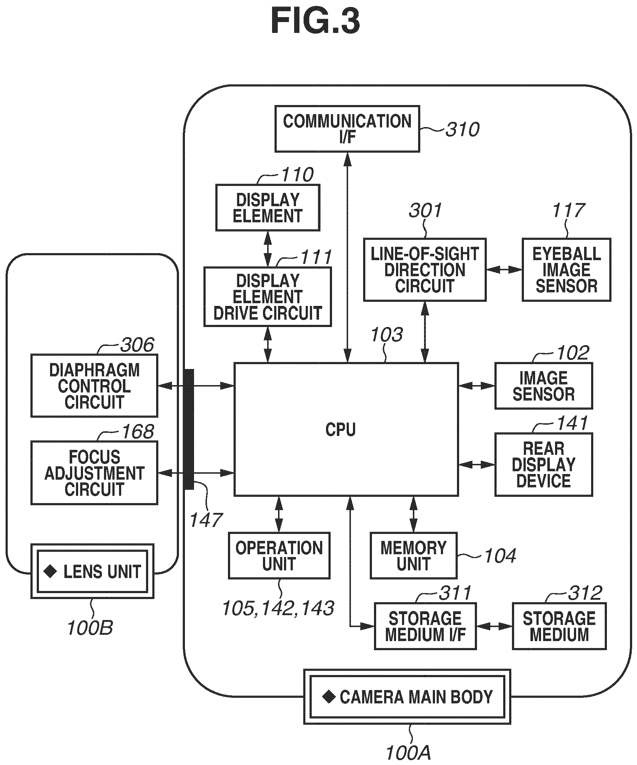

Fig. 3 is a block diagram illustrating a hardware configuration of the imaging apparatus 100. The image sensor 102, the memory unit 104, eyeball image sensor 117, and the display element drive circuit 111 are connected to the CPU 103 built in the apparatus main body 100A. By executing a program stored in the memory unit 104, the CPU 103 implements processing in a flowchart to be described below. The program includes a program of an image registration application to be described below. The memory unit 104 includes a read-only memory (ROM), a random access memory (RAM), or the like, and stores a captured image from the image sensor 102, various types of data to be used in eyeball image registration processing to be described below, and a registered eyeball image. The memory unit 104 functions also as a work area during program execution.

The release button 105 and the operation buttons 142 and 143 are also connected to the CPU 103 as operation units, and output information regarding operations received from the user to the CPU 103. The rear display device 141, which is also connected to the CPU 103, displays a captured image from the image sensor 102 and various types of information under the control of the CPU 103.

The display element 110 is connected to the display element drive circuit 111. The CPU 103 controls the display element drive circuit 111 and displays a captured image from the image sensor 102 and various types of information on the display element 110.

The CPU 103 is connected also with the focus adjustment circuit 168 arranged in the imaging lens 100B and a diaphragm control circuit 306 included in the diaphragm drive apparatus 162 via the mount contact 147.

A communication interface (I/F) 310 and a storage medium I/F 311 are also connected to the CPU 103. The communication I/F 310 is an interface having at least one of communication configurations of a wired communication configuration and a wireless communication configuration, and performs communication with an external apparatus such as a server via a communication path suitable for the communication configuration to be used. The storage medium I/F 311 is an interface for connecting with a detachable storage medium 312, and is a secure digital (SD) card slot, for example. The storage medium 312 is a storage medium that can be detachably attached to the storage medium I/F 311, and is an SD card or a universal serial bus (USB) memory, for example. The storage medium 312 can be used as a recording destination of a captured image from the image sensor 102 and an eyeball image to be registered in the eyeball image registration processing to be described below.

A line-of-sight direction circuit 301 is also connected to the CPU 103. The line-of-sight direction circuit 301 performs analog-to-digital (A/D) conversion on an image signal from the eyeball image sensor 117, and transmits obtained image information to the CPU 103. The CPU 103 extracts each feature point of an eyeball image that is necessary for line-of-sight detection in accordance with a predetermined algorithm to be described below, and further calculates a line-of-sight direction of the user from the position of each feature point.

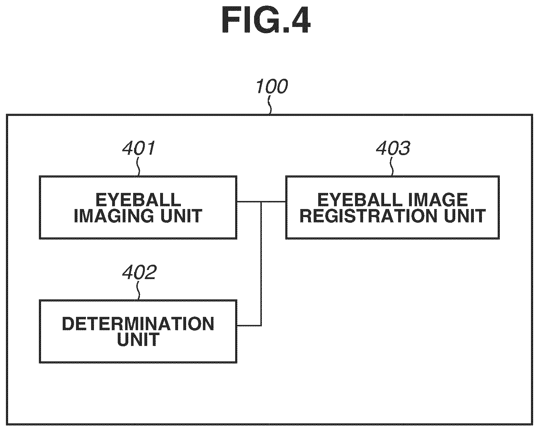

Fig. 4 is a block diagram illustrating a functional configuration of the imaging apparatus 100. By the CPU 103 reading a program stored in the memory unit 104 and executing the program, the imaging apparatus 100 functions as an eyeball imaging unit 401, a determination unit 402, and an eyeball image registration unit 403.

The eyeball imaging unit 401 acquires an image using an image signal from the eyeball image sensor 117. In the present embodiment, the eyeball imaging unit 401 consecutively acquires images at a predetermined time interval until a certain period of time elapses, and provides the acquired images to the determination unit 402.

The determination unit 402 determines whether an image acquired from the eyeball imaging unit 401 satisfies a first standard or satisfies a second standard.

The eyeball image registration unit 403 registers an image satisfying the first standard as an eyeball image for a first authentication (first authentication eyeball image), and registers an image satisfying the second standard as an eyeball image for a second authentication (second authentication eyeball image). The eyeball image registration unit 403 stores the first authentication eyeball image and the second authentication eyeball image into the memory unit 104 in association with information regarding a user who is using the imaging apparatus 100 (for example, login user).

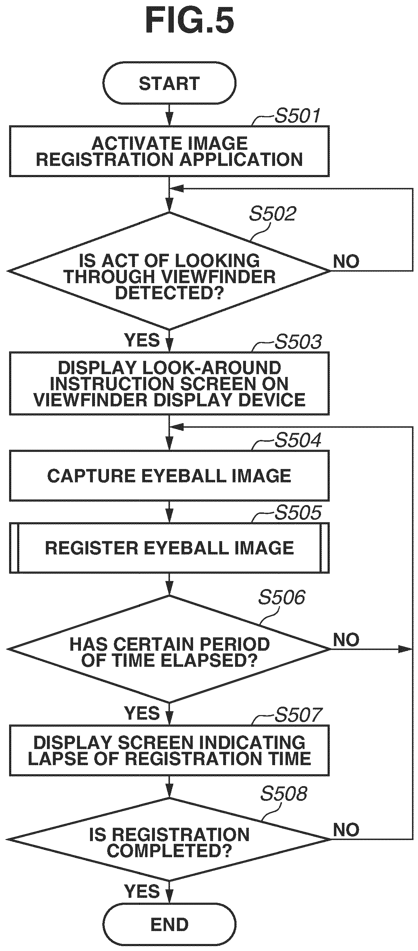

Fig. 5 is a flowchart illustrating processing to be executed in a scene where the imaging apparatus 100 according to the present embodiment performs eyeball image registration. In the following description, by adding "S" to the head of a reference numeral of each process (step), a word "process (step)" is omitted.

In a case where the imaging apparatus 100 is used for the first time, the user of the imaging apparatus 100 performs the eyeball image registration as advance preparation. After the eyeball image registration is completed, it becomes possible to perform user authentication by first authentication processing and second authentication processing using a pre-registered eyeball image. The first authentication processing is authentication processing that uses a first authentication eyeball image to be described below. The second authentication processing is authentication processing that uses a second authentication eyeball image to be described below.

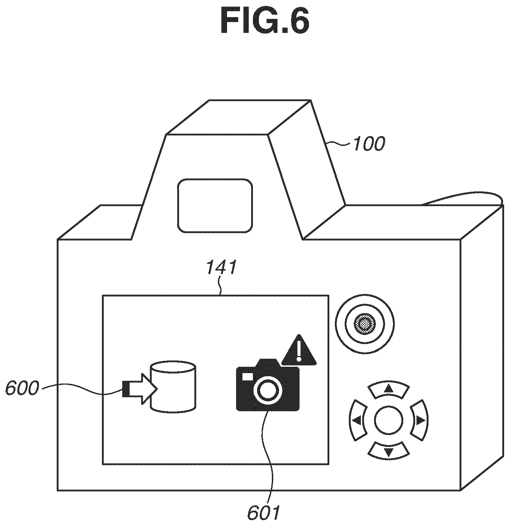

First, when the power of the imaging apparatus 100 is turned ON, the CPU 103 displays a home screen on the rear display device 141. Fig. 6 illustrates an example of the home screen. As illustrated in Fig. 6, an icon 600 for activating the image registration application, and an icon 601 for starting image capturing of a subject are displayed. The processing in the flowchart is started in a case where a touch operation is performed on the icon 600 for activating the image registration application.

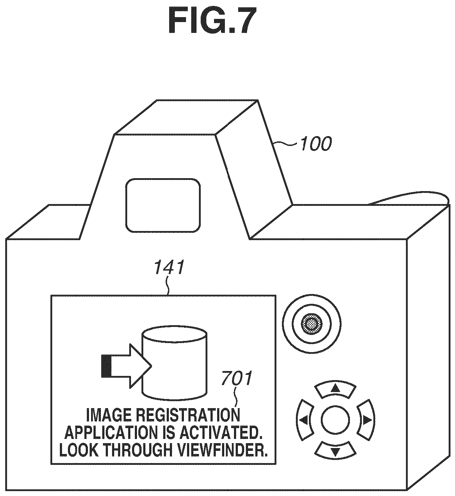

In step S501, the CPU 103 activates the program of the image registration application that is stored in the memory unit 104, and displays an activation screen of the image registration application on the rear display device 141. Fig. 7 illustrates an example of an activation screen to be displayed in this step. As illustrated in Fig. 7, a message 701 including a notification indicating that the image registration application is activated, and an instruction to look through the viewfinder 140 is displayed.

In step S502, the CPU 103 determines whether an act of looking through the viewfinder 140 has been detected using a sensor value from the detection sensor 121. Until the CPU 103 detects the act of looking through the viewfinder 140, the CPU 103 stands by in step S502, and in a case where the act of looking through the viewfinder 140 is detected (YES in step S502), the processing proceeds to step S503.

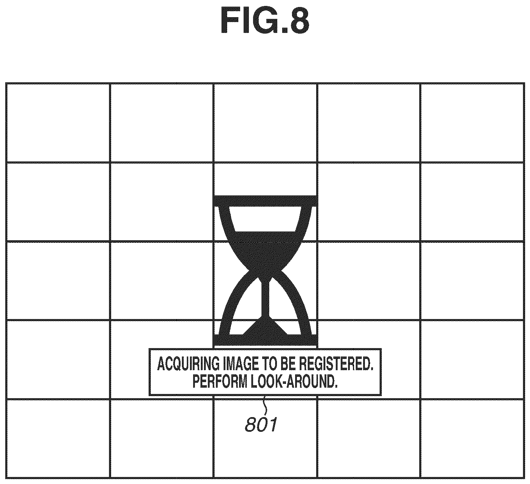

In step S503, the CPU 103 display a screen indicating that an image is being acquired on the display element 110 serving as a viewfinder display device. Fig. 8 illustrates an example of a screen to be displayed in step S503. As illustrated in Fig. 8, a message 801 indicating an instruction to perform a look-around to the user is displayed. Here, the look-around refers to an operation of moving a line of sight in such a manner as to view various positions in the image displayed on the display element 110. The screen illustrated in Fig. 8 continues to be displayed on the display element 110 during execution of the registration processing.

In step S504, the CPU 103 acquires an image using an image signal from the eyeball image sensor 117. Hereinafter, the image to be acquired in this step will be referred to as a camera image. During the execution of the registration processing, the CPU 103 consecutively acquires camera images at a predetermined time interval.

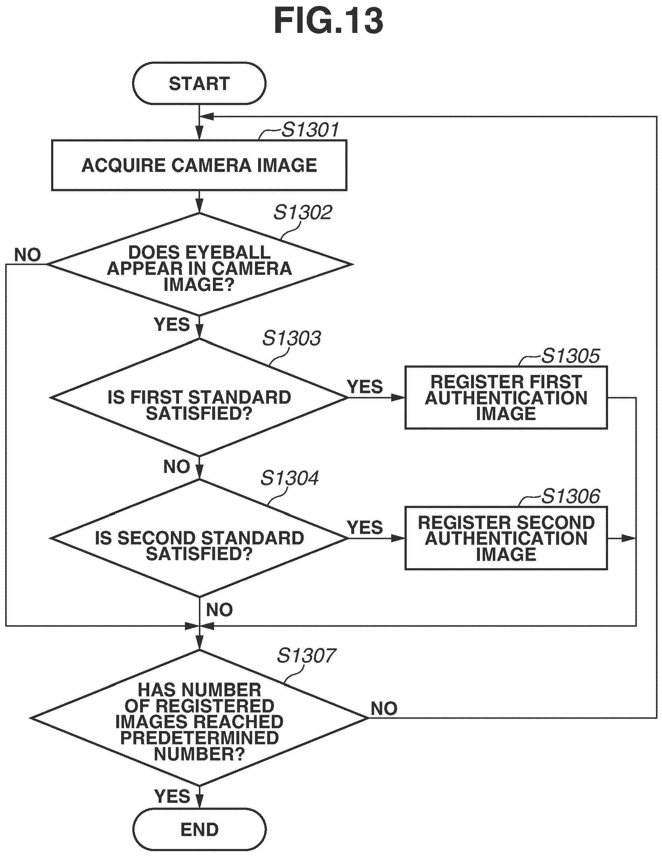

In step S505, the CPU 103 executes the eyeball image registration processing. Details of the registration processing to be executed in this step will be described below with reference to Fig. 13. The CPU 103 starts counting of the time lapsed, using a timer, from a start of the registration processing.

In step S506, the CPU 103 determines whether a certain period of time has elapsed from the start of the registration processing with reference to the timer started in step S505. Herein, the CPU 103 determines whether ten seconds have elapsed, but a different time may be set in accordance with an environment or a use case. In a case where the CPU 103 has determined that the certain period of time has elapsed (YES in step S506), the processing proceeds to step S507. In a case where the CPU 103 has determined that the certain period of time has not elapsed (NO in step S506), the processing returns to step S504, and the registration processing is continued.

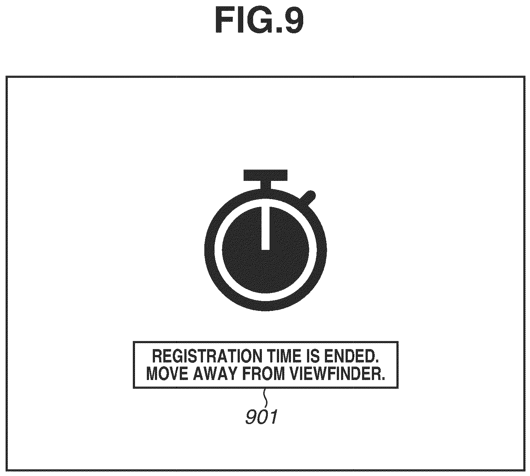

In step S507, the CPU 103 displays a screen indicating a lapse of a registration time on the display element 110 serving as a viewfinder display device, and the processing proceeds to step S508. Fig. 9 illustrates an example of a screen to be displayed in step S507. As illustrated in Fig. 9, a message 901 including an instruction to move away from the viewfinder 140 is displayed.

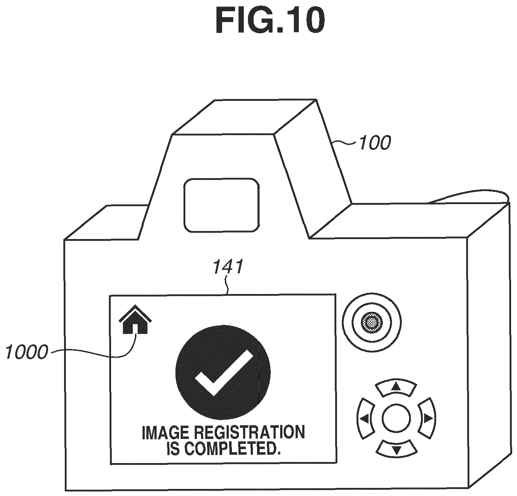

In step S508, the CPU 103 determines whether the eyeball image registration is completed. In a case where the CPU 103 determines that the eyeball image registration is completed (YES in step S508), the CPU 103 displays a registration completion screen on the rear display device 141. Fig. 10 illustrates an example of the registration completion screen. Then, the processing in the flowchart ends.

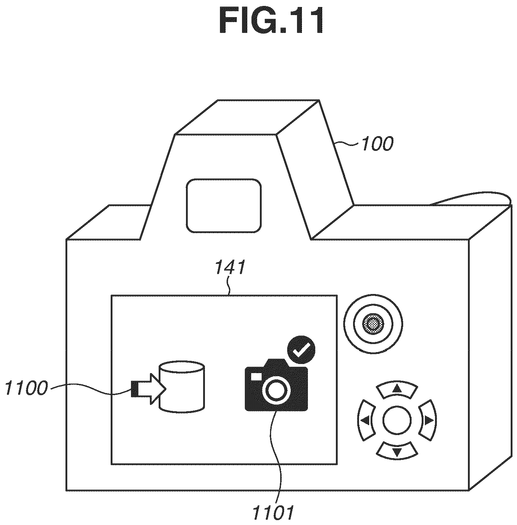

When a touch operation is performed on an icon 1000 in the registration completion screen illustrated in Fig. 10, the CPU 103 displays a home screen on the rear display device 141. Fig. 11 illustrates an example of the home screen to be displayed in a state in which the eyeball image registration is completed. As illustrated in Fig. 11, an icon 1100 for activating the image registration application and an icon 1101 for starting image capturing of a subject are displayed. If a touch operation is performed on the icon 1101 for starting the image capturing of a subject, the CPU 103 switches an operation mode to an imaging mode.

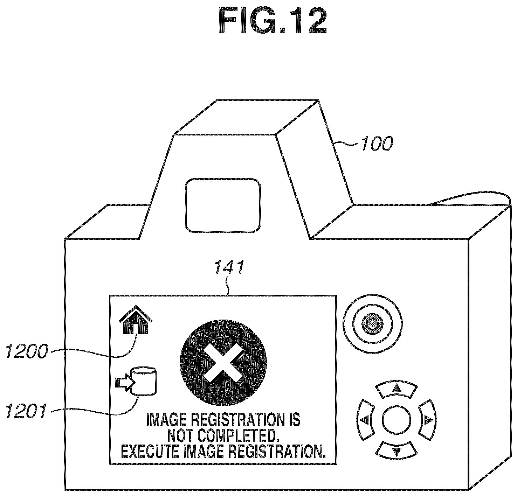

On the other hand, in step S508, in a case where the CPU 103 determines that the eyeball image registration is not completed (NO in step S508), the CPU 103 displays a registration noncompletion screen on the rear display device 141. Fig. 12 illustrates an example of the registration noncompletion screen. As illustrated in Fig. 12, an icon 1200 for displaying a home screen, and an icon 1201 for restarting image registration are displayed. If a touch operation is performed on the icon 1201, the processing returns to step S504, and the CPU 103 restarts the registration processing. On the other hand, if a touch operation is performed on the icon 1200, the CPU 103 displays the home screen on the rear display device 141. In a case where a touch operation is performed on the icon 1200 in step S508, since the eyeball image registration is not yet completed, the home screen illustrated in Fig. 6 is displayed.

Subsequently, the details of the eyeball image registration processing to be executed in step S505 will be described with reference to Fig. 13. Fig. 13 is a flowchart illustrating the eyeball image registration processing.

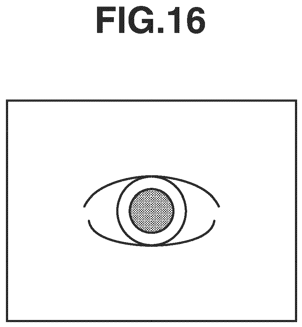

In step S1301, the CPU 103 acquires one of camera images acquired in step S504. Fig. 16 illustrates an example of a camera image acquired in this step.

In step S1302, the CPU 103 determines whether an eyeball appears in the camera image acquired in step S1301. In the present embodiment, the CPU 103 detects an eyeball from the camera image. As an eyeball detection method, a method described in "MediaPipe: A Framework for Building Perception Pipelines",[online],[search on March 19, 2025], <https://arxiv.org/pdf/1906.08172.pdf> may be used, or another method may be used. In a case where the CPU 103 determines that eyeball detection is successful (YES in step S1302), the processing proceeds to step S1303. In a case where the CPU 103 determines that the eyeball detection has failed (NO in step S1302), the processing proceeds to step S1307 without registering the image.

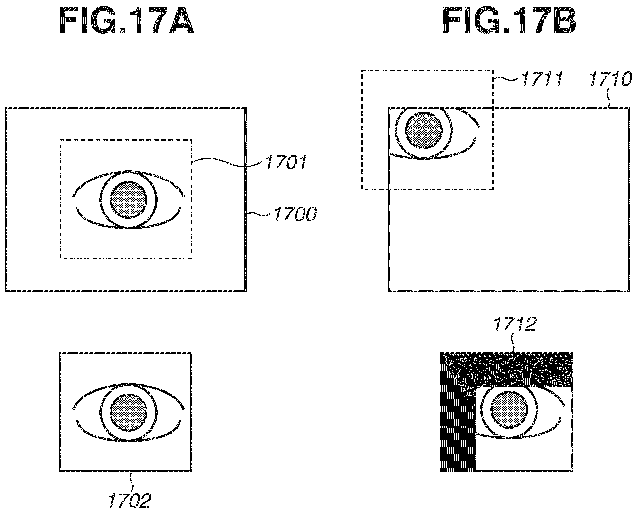

Figs. 17A and 17B are diagrams each illustrating an example of an eyeball detection result. Fig. 17A illustrates an eyeball clipped image 1702 obtained by detecting and clipping an eyeball region 1701 from a camera image 1700. Fig. 17B illustrates an eyeball clipped image 1712 obtained by detecting and clipping an eyeball region 1711 from a camera image 1710. In the present embodiment, in the case where the CPU 103 determines that the eyeball detection is successful, the eyeball clipped image 1702 or 1712 is generated from the camera image 1700 or 1710 acquired in step S1301, and the generated image is a target in the registration processing (steps S1305 and S1306).

In step S1303, the CPU 103 determines whether the camera image acquired in step S1301 satisfies the first standard. In a case where the CPU 103 determines that the first standard is satisfied (YES in step S1303), the processing proceeds to step S1305. In a case where the CPU 103 determines that the first standard is not satisfied (NO in step S1303), the processing proceeds to step S1304.

In step S1304, the CPU 103 determines whether the camera image acquired in step S1301 satisfies the second standard. In a case where the CPU 103 determines that the second standard is satisfied (YES in step S1304), the processing proceeds to step S1306. In a case where the CPU 103 determines that the second standard is not satisfied (NO in step S1304), the processing proceeds to step S1307 without registering the image.

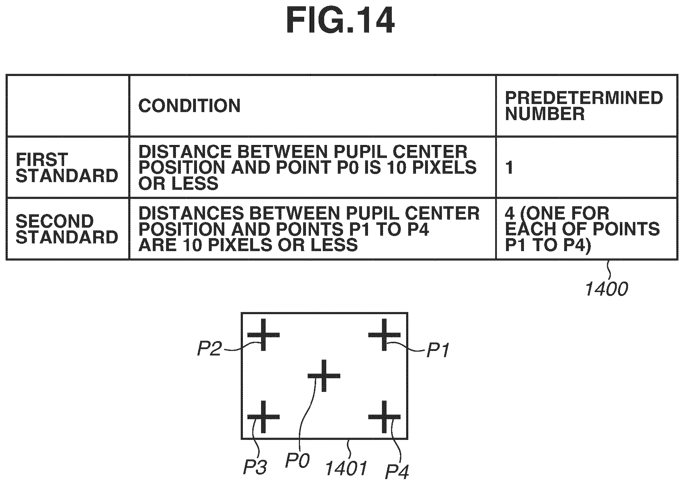

Fig. 14 illustrates an example of data to be used in image determination. Standard data 1400 indicates a condition and a predetermined number of images to be registered (the number of registered images) for each of the first standard and the second standard. Coordinate data 1401 indicates predetermined position coordinates (five points P0 to P4) in a camera image. The point P0 indicates an image center of the camera image. The points P1 to P4 indicate the vicinities of the four corners of the camera image. The standard data 1400 and the coordinate data 1401 are stored in the memory unit 104 or the like, and read and used by the CPU 103 at the time of image determination. In the present embodiment, a method of performing a first determination based on the first standard and a second determination based on the second standard will be described, but three or more determinations may be performed using three or more standards. In addition, the predetermined number of images to be registered may be one or two or more.

In the present embodiment, as the first standard, a condition that a distance between the point P0 of the camera image and a pupil center position is a predetermined number of pixels (for example, ten pixels) or less is set. Accordingly, in step S1303, a camera image in which the pupil center position exists near the point P0 is determined to satisfy the first standard. As the second standard, a condition that distances between the points P1 to P4 of the camera image and the pupil center position are a predetermined number of pixels (for example, ten pixels) or less is set. Accordingly, in step S1304, a camera image in which the pupil center position exists near the points P1 to P4 is determined to satisfy the second standard. The above-described predetermined number of pixels may be appropriately changed in accordance with resolution of the camera image or detection accuracy of a pupil center. In the present embodiment, the predetermined number for the first standard is set to one and the predetermined number for the second standard is set to four, but the predetermined numbers are not limited thereto. The predetermined number for the first standard and the predetermined number for the second standard may be different, or may be the same.

In step S1305, the CPU 103 registers the eyeball clipped image generated in step S1302 as the first authentication eyeball image. Then, the CPU 103 stores the registered first authentication eyeball image in the memory unit 104 in association with information regarding the user who is using the imaging apparatus 100. Then, the processing proceeds to step S1307.

In step S1306, the CPU 103 registers the eyeball clipped image generated in step S1302 as the second authentication eyeball image. Then, the CPU 103 stores the registered second authentication eyeball image in the memory unit 104 in association with information regarding the user who is using the imaging apparatus 100. Then, the processing proceeds to step S1307.

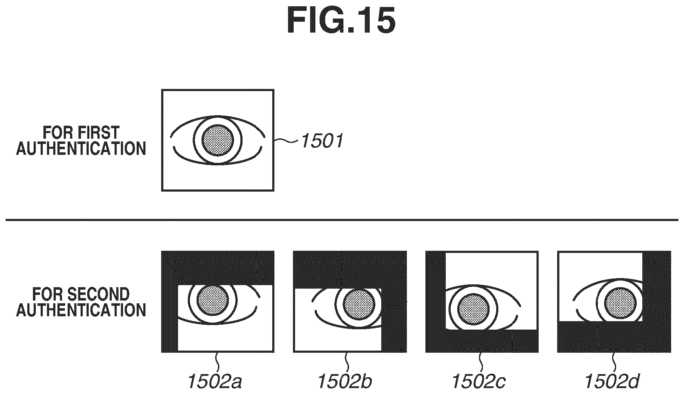

Fig. 15 illustrates an example of registered eyeball images. An image 1501 serves as an example of the first authentication eyeball image. Images 1502a, 1502b, 1502c, and 1502d serve as an example of the second authentication eyeball images.

In step S1307, the CPU 103 determines whether the number of images registered in step S1305 or S1306 has reached the predetermined number with regard to each of the first standard and the second standard. In a case where the CPU 103 determines that the number of registered images has not reached the predetermined number for at least one of the first standard and the second standard (NO in step S1307), until the certain period of time elapses from the start of the registration processing, the processing returns to step S1301, and the next camera image is acquired. In a case where the CPU 103 determines that the numbers of registered images have reached the predetermined numbers for both the first standard and the second standard (YES in step S1307), the CPU 103 determines that the eyeball image registration is completed, and ends the processing in this flowchart. In the present embodiment, since the predetermined number for the first standard is set to one and the predetermined number for the second standard is set to four, one image (image 1501) is registered as the first authentication eyeball image, and four images (images 1502a to 1502d) are registered as the second authentication eyeball images.

According to the above-described first embodiment, by determining whether an image captured using a camera built in a viewfinder of an imaging apparatus satisfies the first standard or the second standard, it is possible to register an image satisfying the first standard and an image satisfying the second standard. With this configuration, in a scene where the imaging apparatus is used, it becomes possible to identify a user of the imaging apparatus by authentication that uses the image satisfying the first standard and authentication that uses the image satisfying the second standard. Accordingly, it is possible to improve the identification accuracy of the user of the imaging apparatus.

In a second embodiment, a description will be given of a method of performing authentication of a user of an imaging apparatus by performing either first authentication processing that uses an image satisfying the first standard or second authentication processing that uses an image satisfying the second standard. Hereinafter, components identical to the components in the first embodiment are assigned the same reference numerals, and descriptions thereof will be omitted.

In the present embodiment, the first authentication processing is authentication to be performed at a timing at which the use of the imaging apparatus 100 is started, and is authentication required to be strict. On the other hand, the second authentication processing is authentication to be performed in a case where the user performs image capturing, for example, at a timing at which an operation on the release button 105 is received after the successful first authentication processing, and is authentication required to be robust (ease of success in authentication) rather than being strict as compared with the first authentication processing.

In the present embodiment, the first authentication processing is what is called active authentication in which the user cooperates for the authentication. For this reason, there is a high possibility that a high-quality image is input during the authentication with the cooperation of the user. Thus, through the processing in the flowchart illustrated in Fig. 5, a high-quality eyeball image such as an image in which an eyeball appears at the image center, or an image with an eyelid properly opened is registered as the first authentication eyeball image.

In the present embodiment, the second authentication processing is what is called inactive authentication in which the user does not efficiently cooperate for the authentication. For this reason, there is a low possibility that a high-quality image is input during the authentication, and variations in input images are considered to be large. Thus, through the processing in the flowchart illustrated in Fig. 5, various types of images supposed to be acquired from the user in terms of an eyeball position, a line-of-sight direction, and a degree of eyelid opening are registered as the second authentication eyeball images.

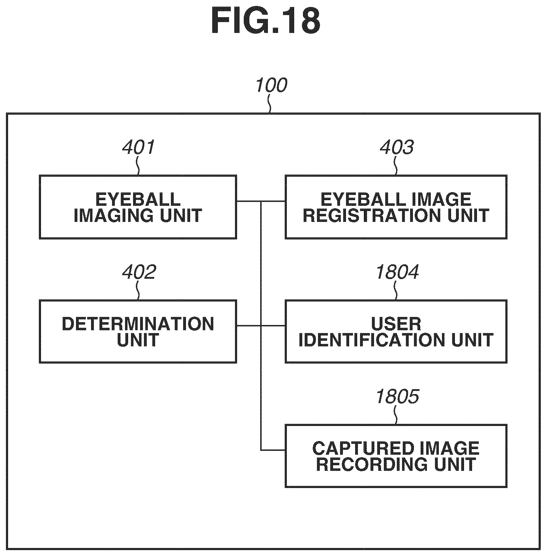

Fig. 18 is a block diagram illustrating a functional configuration of the imaging apparatus 100. By the CPU 103 reading a program stored in the memory unit 104 and executing the program, the imaging apparatus 100 functions as each component illustrated in Fig. 18. As compared with Fig. 4, in the present embodiment, a user identification unit 1804 and a captured image recording unit 1805 are added.

The user identification unit 1804 performs the first authentication processing by acquiring an image from the eyeball imaging unit 401 and checking the input image against the registered first authentication eyeball image, and performs the second authentication processing by checking the input image against the registered second authentication eyeball images. In the present embodiment, the user identification unit 1804 selects either the first authentication processing or the second authentication processing, and performs the selected authentication processing. Then, in a case where the first authentication processing or the second authentication processing is successful, the user identification unit 1804 performs identification of the user using information regarding the user associated with the first authentication eyeball image or the second authentication eyeball images. The first authentication processing is an example of first identification processing. The second authentication processing is an example of second identification processing.

The captured image recording unit 1805 records information regarding the user identified by the user identification unit 1804, and a captured image from the image sensor 102, in the memory unit 104 in association with each other.

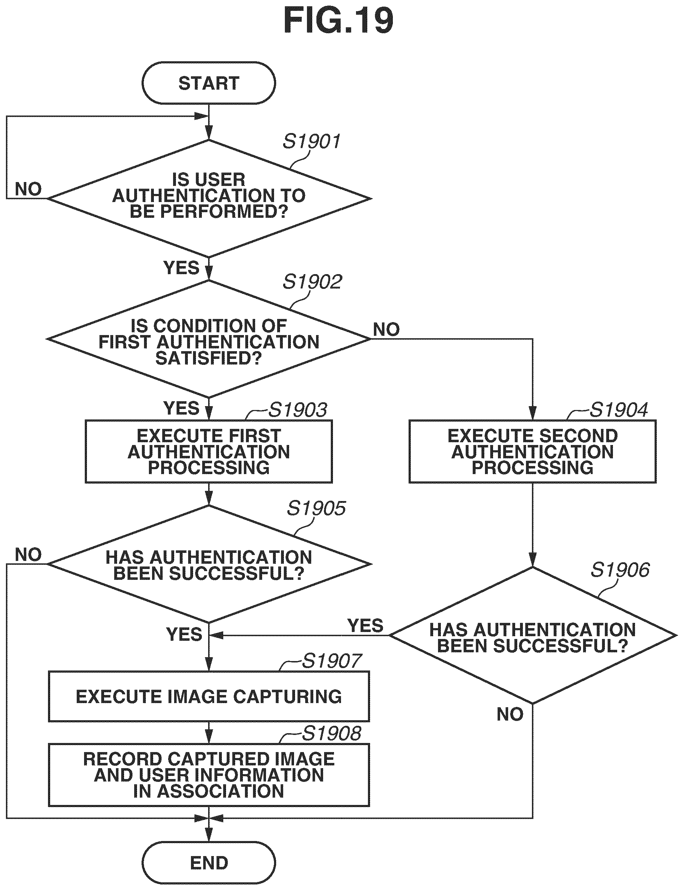

Fig. 19 is a flowchart illustrating processing to be executed in a scene where the imaging apparatus 100 is used.

In step S1901, the CPU 103 determines whether a condition for performing user authentication is satisfied. In a case where the CPU 103 determines that the condition for performing the user authentication is satisfied (YES in step S1901), the processing proceeds to step S1902. In a case where the CPU 103 determines that the condition for performing the user authentication is not satisfied (NO in step S1901), the processing returns to step S1901.

In step S1902, the CPU 103 determines whether a condition of the first authentication is satisfied.

In the present embodiment, it is determined that the condition of the first authentication is satisfied at a timing at which the use of the imaging apparatus 100 is started. For example, in a case where the user activates the imaging apparatus 100 and issues an instruction to execute user authentication, it may be determined that the condition of the first authentication is satisfied. Alternatively, in a case where the user issues an instruction to execute user authentication after a lapse of a predetermined time from the successful first authentication processing, it may be determined that the condition of the first authentication is satisfied. In a case where the CPU 103 determines that the condition of the first authentication is satisfied (YES in step S1902), the processing proceeds to step S1903. In a case where the CPU 103 determines that the condition of the first authentication is not satisfied (NO in step S1902), the CPU 103 determines that a condition of the second authentication is satisfied, and the processing proceeds to step S1904. In the case where it is determined that the condition of the first authentication is satisfied, the CPU 103 may display a message including an instruction to look through the viewfinder 140 on the rear display device 141.

In the present embodiment, the condition of the second authentication is determined to be satisfied at a timing at which an operation on the release button 105 is received after the successful first authentication processing. For example, such a timing is a timing at which an operation on the release button 105 is received after a touch operation is performed on the icon 1101 on the home screen illustrated in Fig. 11 and the operation mode is switched to the imaging mode.

In step S1903, the CPU 103 performs the first authentication processing by acquiring an image acquired using an image signal from the eyeball image sensor 117 and checking the input image against the first authentication eyeball image stored in the memory unit 104. Specifically, the CPU 103 compares an image feature of the input image with image features extracted from all first authentication eyeball images, and in a case where a difference in the features falls within a fixed range, the CPU 103 determines that persons appearing in both of the images are the same (authentication is successful).

The CPU 103 may perform checking using a plurality of input images during execution of the first authentication processing. While acquiring an input image, the CPU 103 may display an instruction to look at a specific position to the user on the display element 110 serving as a viewfinder display device.

In step S1904, the CPU 103 performs the second authentication processing by acquiring an image acquired using an image signal from the eyeball image sensor 117 and checking the input image against the second authentication eyeball images stored in the memory unit 104. Specifically, the CPU 103 compares an image feature of the input image with image features extracted from all second authentication eyeball images, and in a case where a difference in features falls within a fixed range, the CPU 103 determines that persons appearing in both of the images are the same (authentication is successful).

In step S1905, the CPU 103 determines whether the first authentication processing has been successful. In a case where the CPU 103 determines that the first authentication processing has been successful (YES in step S1905), the CPU 103 performs the identification of the user using information regarding the user that is associated with the first authentication eyeball image, and the processing proceeds to step S1907. In a case where the CPU 103 determines that the first authentication processing has failed (NO in step S1905), the CPU 103 ends the processing in this flowchart.

In step S1906, the CPU 103 determines whether the second authentication processing has been successful. In a case where the CPU 103 determines that the second authentication processing has been successful (YES in step S1906), the CPU 103 performs the identification of the user using information regarding the user that is associated with the second authentication eyeball image, and the processing proceeds to step S1907. In a case where the CPU 103 determines that the second authentication processing has failed (NO in step S1906), the CPU 103 ends the processing in this flowchart.

In step S1907, in accordance with an operation performed by the user on the release button 105, the CPU 103 generates a captured image using an image signal from the image sensor 102.

In step S1908, the CPU 103 records information regarding the user identified by the first authentication processing or the second authentication processing and a captured image generated in step S1907 in the memory unit 104 in association with each other. The CPU 103 may record the information and the captured image in the storage medium 312 in place of the memory unit 104. Alternatively, the CPU 103 may access a server via the communication I/F 310 and transmit a control signal so as to record the captured image and the information regarding the user in association with each other. The server is a server apparatus that stores and manages images captured by the imaging apparatus, for example. Then, the processing in this flowchart ends.

In the present embodiment, in a case where the first authentication processing or the second authentication processing fails in step S1905 or S1906, image capturing is not allowed. However, the image capturing may be allowed, and a captured image may be recorded, but the information regarding the user may not be recorded.

According to the above-described second embodiment, by performing authentication while selectively using an image satisfying the first standard or an image satisfying the second standard in accordance with a scene where an imaging apparatus is used, it is possible to improve the identification accuracy of the user of the imaging apparatus.

In a third embodiment, a description will be given of a method of performing authentication of a user of an imaging apparatus by performing both the first authentication processing that uses an image satisfying the first standard and the second authentication processing that uses an image satisfying the second standard. Hereinafter, components identical to the components in the first and second embodiments are assigned the same reference numerals, and descriptions thereof will be omitted.

In the present embodiment, first, the user identification unit 1804 performs the first authentication processing, and only in a case where the first authentication processing is successful, subsequently performs the second authentication processing. Then, in a case where both the first authentication processing and the second authentication processing are successful, the user identification unit 1804 performs the identification of the user using pieces of information regarding the user that are associated with the first authentication eyeball image and the second authentication eyeball images.

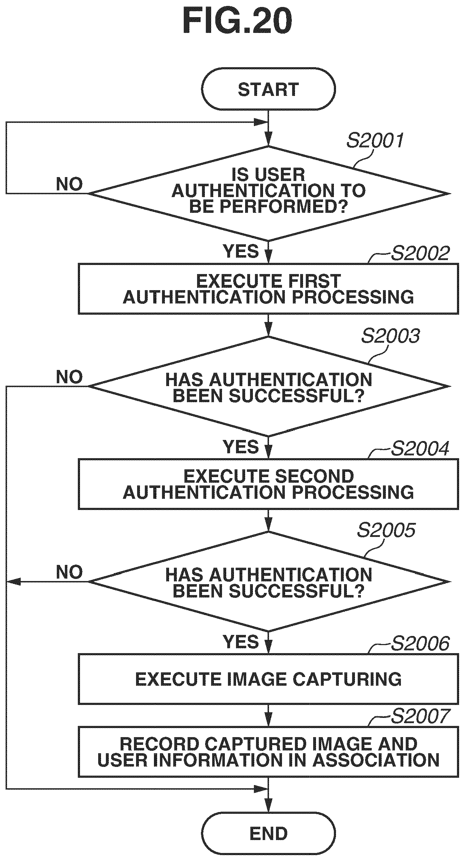

Fig. 20 is a flowchart illustrating processing to be executed in a scene where the imaging apparatus 100 is used.

In step S2001, the CPU 103 determines whether a condition for performing user authentication is satisfied. In a case where the CPU 103 determines that the condition for performing the user authentication is satisfied (YES in step S2001), the processing proceeds to step S2002. In a case where the CPU 103 determines that the condition for performing the user authentication is not satisfied (NO in step S2001), the processing returns to step S2001. In the present embodiment, the condition for performing the user authentication includes a timing at which the use of the imaging apparatus 100 is started, a timing at which an operation on the release button 105 is received, and the like. In a case where it is determined that the condition for performing the user authentication is satisfied, the CPU 103 may display a message including an instruction to look through the viewfinder 140 on the rear display device 141.

In step S2002, the CPU 103 performs the first authentication processing by acquiring an image acquired using an image signal from the eyeball image sensor 117 and checking the input image against the first authentication eyeball image stored in the memory unit 104. This step is processing similar to the processing in step S1903.

In step S2003, the CPU 103 determines whether the first authentication processing has been successful. In a case where the CPU 103 determines that the first authentication processing has been successful (YES in step S2003), the CPU 103 performs the identification of the user using information regarding the user that is associated with the first authentication eyeball image, and the processing proceeds to step S2004. In a case where the CPU 103 determines that the first authentication processing has failed (NO in step S2003), the CPU 103 ends the processing in this flowchart.

In step S2004, the CPU 103 performs the second authentication processing by acquiring an image acquired using an image signal from the eyeball image sensor 117 and checking the input image against the second authentication eyeball images stored in the memory unit 104. This step is processing similar to the processing in step S1904.

During the execution of the first authentication processing and the second authentication processing, the CPU 103 may acquire a plurality of images and perform checking using the plurality of acquired images. While acquiring an image, the CPU 103 may display, on the display element 110 serving as a viewfinder display device, an instruction to look at a specific position or a look-around instruction as described in the first embodiment to the user.

In step S2005, the CPU 103 determines whether the second authentication processing has been successful. In a case where the CPU 103 determines that the second authentication processing has been successful (YES in step S2005), the CPU 103 performs the identification of the user using information regarding the user that is associated with the second authentication eyeball image, and the processing proceeds to step S2006. In a case where the CPU 103 determines that the second authentication processing has failed (NO in step S2005), the CPU 103 ends the processing in this flowchart.

In step S2006, in accordance with an operation performed by the user on the release button 105, the CPU 103 generates a captured image using an image signal from the image sensor 102.

In step S2007, the CPU 103 records information regarding the user identified by the first authentication processing and the second authentication processing and a captured image generated in step S2006 in the memory unit 104 in association with each other. The CPU 103 may record the information and the captured image in the storage medium 312 in place of the memory unit 104. Alternatively, the CPU 103 may access a server via the communication I/F 310 and transmit a control signal so as to record the captured image and the information regarding the user in association with each other. The server is a server apparatus that stores and manages images captured by the imaging apparatus, for example. Then, the processing in this flowchart ends.

In the present embodiment, in a case where the first authentication processing or the second authentication processing fails in step S2003 or S2005, image capturing is not allowed. However, the image capturing may be allowed, and a captured image may be recorded, but the information regarding the user may not be recorded.

According to the above-described third embodiment, by performing authentication using an image satisfying the first standard and an image satisfying the second standard, it is possible to improve the identification accuracy of the user of the imaging apparatus.

### (First Modified Example)

In the above-described first embodiment, the method of using the condition that is based on the pupil center position for image determination has been described. However, the condition to be used for the image determination is not limited thereto, and another condition may be used.

As an example, there is a method of using a size of an infrared light reflection region on a pupil region and an iris region. Since the illumination light sources 113a and 113b are installed inside the viewfinder 140, in a camera image from the eyeball image sensor 117, the infrared light reflection region exists on the pupil region and the iris region. The CPU 103 detects the infrared light reflection region on the pupil region and the iris region, and determines whether the first standard is satisfied or the second standard is satisfied in accordance with a condition that is based on a detected region size. For example, the first standard may include a condition that the detected region size is 10 pixels or more, and the second standard may include a condition that the detected region size is five pixels or more and less than ten pixels. In a case where the infrared light reflection region on the pupil region and the iris region is not detected, an image may not be registered.

As another example, there is a method of using a line-of-sight direction. The CPU 103 determines whether the first standard is satisfied or the second standard is satisfied in accordance with a condition that is based on a line-of-sight direction calculated by the line-of-sight direction circuit 301. For example, line-of-sight directions may be classified into nine directions (eight directions of up, down, left, right, and oblique directions, and a front direction), and each standard may be set using the above-described nine directions.

As yet another example, there is a method of using a degree of eyelid opening.

Furthermore, image determination may be performed based on a condition obtained by combining any of a plurality of conditions such as a condition that is based on the pupil center position, a condition that is based on the size of the infrared light reflection region on the pupil region and the iris region, and a condition that is based on the line-of-sight direction.

### (Second Modified Example)

In the above-described first embodiment, the method of individually setting the first standard and the second standard has been described. However, the second standard may be set in conjunction with an image satisfying the first standard. In this case, first, the CPU 103 completes registration of only an image satisfying the first standard. Next, the CPU 103 may compare an image feature of an image acquired thereafter with an image feature of the registered image, and in a case where a difference in features falls within a fixed range, may determine that the second standard is satisfied. As the image feature and the difference in features used herein, for example, it is sufficient that an image feature and a difference in features to be used in the authentication processing are used.

### (Third Modified Example)

In the above-described first embodiment, the eyeball image registration is performed by the user issuing an instruction to start image registration. However, the eyeball image registration may be performed using an image acquired while the user is looking through the viewfinder 140 and performing image capturing of a subject. Alternatively, the eyeball image registration may be performed using an image acquired while the user is looking through the viewfinder 140 and looking at a specific position. Alternatively, if an imaging apparatus has a calibration function of collecting an image acquired when the user looks at a specific position, the eyeball image registration may be performed using the image acquired at the time of calibration.

### (Fourth Modified Example)

In the above-described first embodiment, an image satisfying the first standard is registered as the first authentication eyeball image, and an image satisfying the second standard is registered as the second authentication eyeball image. However, an image satisfying another standard may be selected from the image satisfying the first standard and the image satisfying the second standard, and the selected image may be registered again.

For example, an image with the region size of the pupil region that is equal to or larger than a fixed value may be selected from among all images satisfying the first standard and all images satisfying the second standard, and the selected image may be registered again. In addition, in authentication processing, in order to use eyeball images that have been registered as they satisfy specific standards in combination, information indicating which standard an eyeball image satisfies in registration may be stored in association with each of the registered eyeball images.

### (Fifth Modified Example)

In the above-described first embodiment, the eyeball image is registered. However, information extracted from the eyeball image may be registered. For example, data on an image feature to be used in the authentication processing may be extracted from the eyeball image and registered.

### (Sixth Modified Example)

In the above-described first embodiment, the determination based on the first standard and the determination based on the second standard are consecutively performed on one image. However, after the determination based on the first standard is performed on a series of images, the determination based on the second standard may be performed on the series of images. The CPU 103 may select whether to perform registration of a first authentication eyeball image or perform registration that uses a second authentication eyeball image in accordance with an operation performed by the user. The CPU 103, before starting image registration, may display a selection screen for selecting a standard to be used for the image determination, and receive an operation of selecting the standard before starting the image registration.

### (Seventh Modified Example)

In the above-described second embodiment, the registered eyeball images are used for the authentication processing. However, an integrated image obtained by integrating a plurality of similar images into one image may be used for the authentication processing. By integrating the registered eyeball images, a calculation time of the authentication processing can be reduced.

As a method of classifying the registered eyeball images into groups of similar images and integrating the images, for example, there is a method of performing clustering based on feature amounts obtained from the eyeball images, and reducing the number of images so that the number of images belonging to one class is one. As a feature amount used herein, for example, an image feature to be used for the authentication processing may be used.

In the first authentication processing and the second authentication processing, priority orders may be given to the registered eyeball images such that an eyeball image having an image feature with a high possibility of being input is preferentially used in checking over an eyeball image having an image feature with a low possibility of being input. In addition, for example, when the clustering is performed, priority orders may be given to the eyeball images or integrated images in accordance with the number of images belonging to the same class.

### (Eighth Modified Example)

In the above-described second embodiment, the description has been given of the example in which an eyeball image suitable for each type of authentication is pre-registered for the first authentication processing, which is the authentication to be performed at the timing at which the use of the imaging apparatus 100 is started, and the second authentication processing, which is the authentication to be performed in the case where the user performs image capturing. Here, purposes of performing the authentication processing include guaranteeing authenticity of an image captured by the imaging apparatus 100, and invoking a mode set for each user of the imaging apparatus 100. In a case where an HMD is used as the imaging apparatus, the purposes also include login of an HMD user to a virtual environment such as a metaverse, and payment for an object viewed by the user of the HMD.

As the first authentication processing, in cases where authentication with a low possibility of erroneously accepting a different person is performed, such as guaranteeing the authenticity of an image captured by the imaging apparatus 100 and the payment of an object viewed by the user of the HMD, the first standard may be set to a standard stricter than the second standard. For example, the first standard may be set by combining a plurality of conditions including a condition that is based on the pupil center position, a condition that is based on the size of the infrared light reflection region detected from the pupil region and the iris region, and a condition that is based on the line-of-sight direction. In addition, the predetermined number for the first standard may be set to a number smaller than the predetermined number for the second standard.

As the second authentication processing, in cases where authentication with a high possibility of accepting a right person is performed, such as invoking a mode set for each user of the imaging apparatus, and the login of an HMD user to a virtual environment such as a metaverse, the second standard may be set to a standard looser than the first standard. The predetermined number for the second standard may be set to a number larger than the predetermined number for the first standard.

### (Ninth Modified Example)

In the above-described second and the third embodiments, the description has been given assuming that an imaging apparatus that performs eyeball image registration and an imaging apparatus that identifies a user using a registered eyeball image are the same. However, these imaging apparatuses may be different apparatuses. In a case where the different apparatuses are used, the imaging apparatus that performs the eyeball image registration may store a registered eyeball image in a storage region of an external server in association with information regarding the user. Then, the imaging apparatus that identifies the user may acquire an eyeball image registered by another apparatus from an external server, and perform authentication processing.

The present invention has been described in detail based on embodiments, but the present invention is not limited to these specific embodiments, and the present invention includes various configurations without departing from the gist of the present invention. Furthermore, each of the above-described embodiments merely indicates an embodiment of the present invention, and the embodiments can be appropriately combined.

The present invention can also be realized by executing the following processing: software (program) for implementing the functions of the above-described embodiments is supplied to a system or an apparatus via a network or various storage media, and a computer (or a CPU, a micro processing unit (MPU), or the like) of the system or the apparatus reads and executes program codes. In this case, the program and a storage medium storing the program constitute the present invention.

The disclosure of each of the above-described embodiments includes the following configurations, method, program and computer-readable storage medium.
1. An imaging apparatus (100) comprising:
   imaging means (401) configured to capture an eyeball image (1700, 1710) of a user of the imaging apparatus;
   first determination means (402) configured to determine whether the eyeball image (1700, 1710) captured by the imaging means (401) satisfies a first condition;
   second determination means (402) configured to determine whether the eyeball image (1700, 1710) captured by the imaging means (401) satisfies a second condition different from the first condition;
   first identification means (103) configured to execute first identification processing for identifying a user of the imaging apparatus (100) based on a first eyeball image (1501) determined to satisfy the first condition by the first determination means (402);
   second identification means (103) configured to execute second identification processing for identifying the user of the imaging apparatus (100) based on a second eyeball image (1502a-d) determined to satisfy the second condition by the second determination means (402); and
   control means (103) configured to perform control to record information regarding the user identified by the first identification processing and the second identification processing and the eyeball image (1700, 1710) captured by the imaging apparatus (100) in a memory (104, 312) in association with each other.
2. The imaging apparatus (100) according to configuration 1, wherein the memory (104, 312) is built in the imaging apparatus or physically detachably connected to the imaging apparatus.
3. The imaging apparatus (100) according to configuration 1,
   wherein the imaging apparatus (100) is connected with a server including the memory via a wired and/or wireless communication path (310), and
   wherein the control means (103) is configured to transmit a signal to the server to record the captured image and the information regarding the user in the memory in association with each other.
4. The imaging apparatus (100) according to any one of configurations 1 to 3, wherein, in a case where identification of the user is successful in either the first identification processing or the second identification processing, the control means (103) is configured to perform control to record the information regarding the user in the memory (104, 312).
5. The imaging apparatus (100) according to any one of configurations 1 to 3, wherein, in a case where identification of the user is successful in both the first identification processing and the second identification processing, the control means (103) is configured to perform control to record the information regarding the user in the memory (104, 312).
6. The imaging apparatus (100) according to configuration 4, wherein the control means (103) is configured to select whether to execute the first identification processing or the second identification processing.
7. The imaging apparatus (100) according to any one of configurations 1 to 6,
   wherein the first identification means (1804) is configured to execute the first identification processing by acquiring the eyeball image (1700, 1710) captured by the imaging means (401) and checking the eyeball image (1700, 1710) captured by the imaging means against the first eyeball image (1501), and
   wherein the second identification means (1804) is configured to execute the second identification processing by acquiring the eyeball image (1700, 1710) captured by the imaging means (401) and checking the eyeball image (1700, 1710) captured by the imaging means (401) against the second eyeball image (1502a-d).
8. The imaging apparatus (100) according to any one of configurations 1 to 7, wherein, during execution of at least one of determination by the first and second determination means (402), the control means (103) is configured to perform control to display, on a viewfinder display device (110), a message indicating an instruction to move a line of sight (801).
9. The imaging apparatus according to any one of configurations 1 to 8, further comprising registration means (403) configured to register the first and second eyeball images.
10. The imaging apparatus (100) according to any one of configurations 1 to 9, further comprising registration means (403) configured to register a plurality of first eyeball images and a plurality of second eyeball images (1502a-d),
   wherein a number of registered first eyeball images and a number of registered second eyeball images are different.
11. The imaging apparatus (100) according to configuration 7, further comprising registration means (403) configured to register a plurality of first eyeball images or a plurality of second eyeball images (1502a-d),
   wherein priority orders are given to the plurality of images, and
   wherein the first or second identification means (1804) is configured to perform checking against the eyeball image (1700, 1710) captured by the imaging means (401) in accordance with the priority orders.
12. The imaging apparatus (100) according to any one of configurations 1 to 11,
   wherein the first condition is a condition that a pupil center position in the eyeball image (1700, 1710) captured by the imaging means (401) exists near an image center (P0), and
   wherein the second condition is a condition that a pupil center position in the eyeball image (1700, 1710) captured by the imaging means (401) exists at a position distant from the image center (P1-P4).
13. The imaging apparatus (100) according to any one of configurations 1 to 12, further comprising illumination means (113a, 113b) configured to emit infrared light to an eyeball (114),
   wherein the first and second conditions are each a condition that an infrared light reflection region on a pupil region and an iris region in the eyeball image (1700, 1710) captured by the imaging means (401) have a predetermined size, and
   wherein the predetermined size respectively varies between the first and second conditions.
14. The imaging apparatus (100) according to any one of configurations 1 to 13,
   wherein the first and second conditions are each a condition that a line-of-sight direction in the eyeball image (1700, 1710) captured by the imaging means (401) is a predetermined direction, and
   wherein the predetermined direction respectively varies between the first and second conditions.
15. The imaging apparatus (100) according to any one of configurations 1 to 14, wherein, in a case where a difference in image features between the eyeball image (1700, 1710) captured by the imaging means (401) and the first eyeball image (1501) falls within a fixed range, the second determination means (402) is configured to determine that the second condition is satisfied.
16. The imaging apparatus (100) according to configuration 1,
   wherein the first identification means (103) is configured to integrate similar images among first eyeball images determined to satisfy the first condition by the first determination means (402), and execute the first identification processing based on an integrated image, and
   wherein the second identification means (103) is configured to integrate similar images among second eyeball images determined to satisfy the second condition by the second determination means (402), and execute the second identification processing based on an integrated image.
17. A control method for an imaging apparatus, the control method comprising:
   capturing an eyeball image (1700, 1710) of a user of the imaging apparatus;
   determining whether the captured eyeball image (1700, 1710) satisfies a first condition;
   determining whether the captured eyeball image (1700, 1710) satisfies a second condition different from the first condition;
   executing first identification processing for identifying a user of the imaging apparatus (100) based on a first eyeball image (1501) determined to satisfy the first condition;
   executing second identification processing for identifying the user of the imaging apparatus (100) based on a second eyeball image (1502a-d) determined to satisfy the second condition; and
   performing control to record information regarding the user identified by the first identification processing and the second identification processing and the eyeball image captured by the imaging apparatus (100) in a memory (104, 312) in association with each other.
18. A program comprising instructions which, when the program is executed by a computer, cause the computer to carry out a control method for an imaging apparatus (100) according to configuration 17.
19. A computer-readable data carrier having stored thereon the computer program of configuration 18.

According to the embodiments of the present invention, it is possible to improve the identification accuracy of the user of the imaging apparatus.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments, but is defined by the scope of the following claims.

## Claims

1. An imaging apparatus (100) comprising:
imaging means (401) configured to capture an eyeball image (1700, 1710) of a user of the imaging apparatus;
first determination means (402) configured to determine whether the eyeball image (1700, 1710) captured by the imaging means (401) satisfies a first condition;
second determination means (402) configured to determine whether the eyeball image (1700, 1710) captured by the imaging means (401) satisfies a second condition different from the first condition;
first identification means (103) configured to execute first identification processing for identifying a user of the imaging apparatus (100) based on a first eyeball image (1501) determined to satisfy the first condition by the first determination means (402);
second identification means (103) configured to execute second identification processing for identifying the user of the imaging apparatus (100) based on a second eyeball image (1502a-d) determined to satisfy the second condition by the second determination means (402); and
control means (103) configured to perform control to record information regarding the user identified by the first identification processing and the second identification processing and the eyeball image captured by the imaging apparatus (100) in a memory (104, 312) in association with each other.

2. The imaging apparatus (100) according to claim 1, wherein the memory (104, 312) is built in the imaging apparatus or physically detachably connected to the imaging apparatus.

3. The imaging apparatus (100) according to claim 1,
wherein the imaging apparatus (100) is connected with a server including the memory via a wired and/or wireless communication path (310), and
wherein the control means (103) is configured to transmit a signal to the server to record the captured image and the information regarding the user in the memory in association with each other.

4. The imaging apparatus (100) according to any one of claims 1 to 3, wherein, in a case where identification of the user is successful in either the first identification processing or the second identification processing, the control means (103) is configured to perform control to record the information regarding the user in the memory (104, 312).

5. The imaging apparatus (100) according to any one of claims 1 to 3, wherein, in a case where identification of the user is successful in both the first identification processing and the second identification processing, the control means (103) is configured to perform control to record the information regarding the user in the memory (104, 312).

6. The imaging apparatus (100) according to claim 4, wherein the control means (103) selects whether to execute the first identification processing or the second identification processing.

7. The imaging apparatus (100) according to any one of claims 1 to 6,
wherein the first identification means (1804) is configured to execute the first identification processing by acquiring the eyeball image (1700, 1710) captured by the imaging means (401) and checking the eyeball image (1700, 1710) captured by the imaging means (401) against the first eyeball image (1501), and
wherein the second identification means (1804) is configured to execute the second identification processing by acquiring the eyeball image (1700, 1710) captured by the imaging means (401) and checking the eyeball image (1700, 1710) captured by the imaging means (401) against the second eyeball image (1502a-d).

8. The imaging apparatus (100) according to any one of claims 1 to 7, wherein, during execution of at least one of determination by the first and second determination means (402), the control means (103) is configured to perform control to display, on a viewfinder display device (110), a message indicating an instruction to move a line of sight (801).

9. The imaging apparatus (100) according to any one of claims 1 to 8, further comprising registration means (403) configured to register the first and second eyeball images.

10. The imaging apparatus (100) according to any one of claims 1 to 9, further comprising registration means (403) configured to register a plurality of first eyeball images and a plurality of second eyeball images (1502a-d),
wherein a number of registered first eyeball images and a number of registered second eyeball images are different.

11. The imaging apparatus (100) according to claim 7, further comprising registration means (403) configured to register a plurality of first eyeball images or a plurality of second eyeball images (1502a-d),
wherein priority orders are given to images of the plurality of registered images, and
wherein the first identification means (1804) or the second identification means (1804) is configured to perform checking against the eyeball image (1700, 1710) captured by the imaging means (401) in accordance with the priority orders.

12. The imaging apparatus (100) according to any one of claims 1 to 11,
wherein the first condition is a condition that a pupil center position in the eyeball image (1700, 1710) captured by the imaging means (401) exists near an image center (P0), and
wherein the second condition is a condition that a pupil center position in the eyeball image (1700, 1710) captured by the imaging means (401) exists at a position distant from the image center (P1-P4).

13. The imaging apparatus (100) according to any one of claims 1 to 12, further comprising illumination means (113a, 113b) configured to emit infrared light to an eyeball (114),
wherein the first and second conditions are each a condition that an infrared light reflection region on a pupil region and an iris region in the eyeball image (1700, 1710) captured by the imaging means (401) have a predetermined size, and
wherein the predetermined size respectively varies between the first and second conditions.

14. The imaging apparatus (100) according to any one of claims 1 to 13,
wherein the first and second conditions are each a condition that a line-of-sight direction in the eyeball image (1700, 1710) captured by the imaging means (401) is a predetermined direction, and
wherein the predetermined direction respectively varies between the first and second conditions.

15. The imaging apparatus (100) according to any one of claims 1 to 14, wherein, in a case where a difference in image features between the eyeball image (1700, 1710) captured by the imaging means (401) and the first eyeball image falls within a fixed range, the second determination means (402) is configured to determine that the second condition is satisfied.
